# EUROPEAN PATENT APPLICATION

(11) **EP 4 361 193 A1**
(43) Date of publication of application: **01.05.2024**
(21) Application number: 22828452.7
(22) Date of filing: 22.06.2022
(51) Int. Cl.: C08G 59/24

(54) **EPOXY RESIN COMPOSITION**

(30) Priority: 24.06.2021 JP 2021104792
(71) Applicant: ADEKA CORPORATION, Arakawa-ku Tokyo 116-8554 (JP)
(72) Inventor: SUZUKI, Sho, Kuki-shi, Saitama 346-0101 (JP); OKANO, Ippei, Kuki-shi, Saitama 346-0101 (JP); TAMASO, Ken-ichi, Kuki-shi, Saitama 346-0101 (JP)
(74) Representative: Paustian, Othmar
(86) International application number: PCT/JP2022/024870
(87) International publication number: WO 2022/270536

(57) **Abstract**

An epoxy material that provides a cured product having a reduced modulus of elasticity and thereby maintaining reliability even under conditions of wide environmental variation. The epoxy resin composition provided includes (A) an epoxy compound A of formula (1) below, (B) phenyl glycidyl ether substituted with a C6-20 hydrocarbon group, and (C) a curing agent. In formula (1), R¹ and R² each independently represent C2-4 alkylene; R³ represents methylene or -C(CH₃)₂-; and a and b each independently represent a number of 1 to 10.

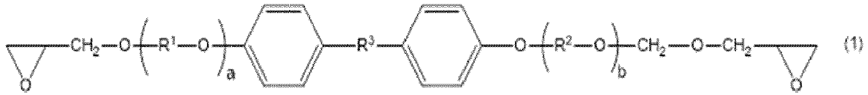

## Description

### Technical Field

This invention relates to an epoxy resin composition combining two specific epoxy compounds.

### Background Art

Epoxy resins exhibit excellent performance characteristics in a wide range of applications, including adhesives, coatings, electrical insulating materials, and civil engineering and construction materials. In the electrical and electronics fields, in particular, epoxy resins are used in sealing materials, casting materials, and adhesives, taking advantage of their characteristic adhesive properties, heat resistance, etc. In these applications, epoxy resins are often required to maintain the adhesion and heat resistance even in environments with large temperature differences or high humidity.

Bisphenol epoxy resins, which are inexpensive, readily available, and versatile, cure in the presence of a curing agent to provide a cured product having high adhesion and heat resistance. Nevertheless, this cured product has problems, such as cracking or peeling from the substrate, in environments with large temperature differences or high humidity because of its excessively high modulus of elasticity.

One conceivable approach to solving the above problems is to reduce the modulus of elasticity of the cured product, specifically through the combined use of a plasticizer. However, the part of the plasticizer that is not incorporated in the epoxy resin curing system bleeds out after cure to reduce the adhesion. In order to improve the reliability of cured products by reducing the modulus of elasticity to some extent while maintaining the adhesive properties, it has been proposed to use a compound having an epoxy group and a long-chain alkyl group in combination, as disclosed, for example, in patent literature 1 below. This technique is successful in providing a cured product with some improved flexibility but not enough to withstand use in the environments described above.

### Citation List

### Patent Literature

Patent literature 1: US 5683627 A

### Summary of Invention

### Technical Problem

An object of the invention is to provide an epoxy material that provides a cured material with a reduced modulus of elasticity so as to maintain reliability even under conditions of wide environmental variation.

### Solution to Problem

As a result of extensive investigations, the inventors have found an epoxy resin composition combining two specific epoxy compounds and reached the invention based on this finding. The invention provides an epoxy resin composition including: (A) an epoxy compound A represented by general formula (1) described below; (B) an epoxy compound B represented by general formula (2) described below; and C) a curing agent. 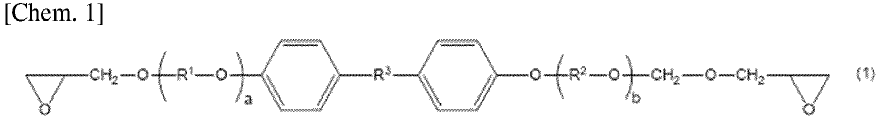 wherein R¹ and R ² each independently represent an alkylene group having 2 to 4 carbon atoms; R³ represents a methylene group or -C(CH₃)₂-; and a and b each independently represent a number of 1 to 10. 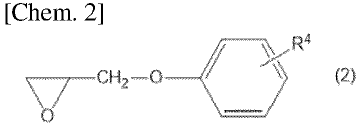 wherein R⁴ represents a hydrocarbon group having 6 to 20 carbon atoms.

### Advantageous Effect of Invention

The effect of the invention is to provide an epoxy resin composition having a low modulus of elasticity required to maintain reliability even under conditions of wide environmental variation. The epoxy resin composition is suited for use in a wide variety of applications, including sealing materials, casting materials, and adhesives in the electric/electronic field.

### Description of Embodiments

The epoxy resin composition of the invention contains (A) an epoxy compound A represented by general formula (1): 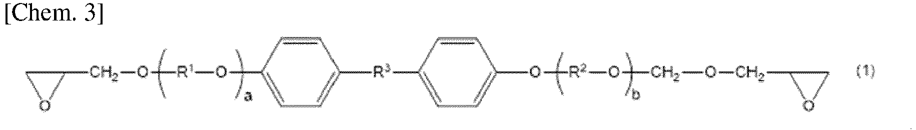
wherein R¹ and R ² each independently represent an alkylene group having 2 to 4 carbon atoms; R³ represents a methylene group or -C(CH₃)₂-; and a and b each independently represent a number of 1 to 10,
(B) an epoxy compound B represented by general formula (2): 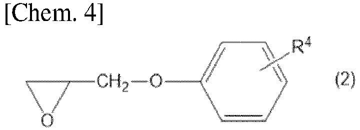
wherein R⁴ represents a hydrocarbon group having 6 to 20 carbon atoms,
and (C) a curing agent.

In the epoxy compound A as component (A), R¹ and R² are each a C2-4 alkylene group, such as ethylene, propylene, isopropylene, butylene, or isobutylene. Among them preferred are ethylene, propylene, and isopropylene, with isopropylene being more preferred, in view of the low modulus of elasticity of the resulting cured product. R¹ and R² may be either the same or different, but are preferably the same in terms of ease of synthesis.

In the epoxy compound A as component (A), the symbols a and b are each independently a number of from 1 to 10, and preferably from 1 to 3 in terms of the balance between modulus of elasticity and curing properties. The symbols a and b may be the same or different but are preferably the same in terms of ease of synthesis. When two or more epoxy compounds A are used in combination, the averages of a's and b's are each preferably in the range of from 1 to 3.

The epoxy compound A can be prepared through known methods. For example, the epoxy compound A is obtained by addition reaction of a bisphenol compound, such as bisphenol A or bisphenol F, with an alkylene oxide using an alkali catalyst, such as sodium hydroxide, followed by epoxidation with epichlorohydrin. Starting with bisphenol A yields the epoxy compound A in which R³ is -C(CH₃)₂-, and using bisphenol F produces the epoxy compound A wherein R³ is methylene.

The alkylene oxide includes ethylene oxide, propylene oxide, and butylene oxide. The symbols a and b can be varied by adjusting the number of moles of alkylene oxide to be added per mole of the bisphenol compound. For example, when adding 2 moles of propylene oxide, the numbers represented by a and b are each theoretically 1.

Epoxidation with epichlorohydrin can be performed, for example, by using 1.6 to 3 mol of a basic compound, e.g., sodium hydroxide, and 2 to 20 mol of epichlorohydrin per mole of the bisphenol compound alkylene oxide adduct, and, if necessary, a phase transfer catalyst at 40° to 90°C under normal or reduced pressure. Excess epichlorohydrin is preferably removed by evaporation.

The phase transfer catalyst includes tetramethylammonium salts and tetrabutylammonium salts. In using the phase transfer catalyst, it is preferably used in an amount of from 0.001 to 0.1 mol per mole of the bisphenol compound alkylene oxide adduct.

Epoxidation can also be carried out by causing 1 mol of the bisphenol compound alkylene oxide adduct and 2 to 4 mol of epichlorohydrin to react with each other using a Lewis acid, e.g., tin chloride, as a catalyst to form a hydrin compound, which is then ring-closed in the presence of 1.6 to 3 mol of a basic compound, e.g., sodium hydroxide, with or without a solvent.

Examples of the solvent include ketones, such as methyl ethyl ketone, methyl amyl ketone, diethyl ketone, acetone, methyl isopropyl ketone, propylene glycol monomethyl ether acetate, and cyclohexanone; ethers, such as tetrahydrofuran, 1,2-dimethoxyethane, 1,2-diethoxyethane, and propylene glycol monomethyl ether; esters, such as ethyl acetate and n-butyl acetate; aromatic hydrocarbons, such as benzene, toluene, and xylene; halogenated aliphatic hydrocarbons, such as carbon tetrachloride, chloroform, trichloroethylene, and methylene chloride; and halogenated aromatic hydrocarbons, such as chlorobenzene.

The epoxy compound A as obtained may be isolated and purified by one of or a combination of oil-water separation using water or organic solvents, filtration, concentration, distillation, extraction, crystallization, recrystallization, adsorption, column chromatography, and so on.

The epoxy compound A as component (A) may be a commercially available product, including ADEKA Resin series EP-4000, EP-4003, EP-4005, EP-4000S, EP-4003S, EP-4010S, and EP-4000L, available from ADEKA Corp.

In the epoxy compound B as component (B), R⁴ is a C6-20 hydrocarbon group, such as n-hexyl, cyclohexyl, 1,3-dimethylbutyl, 1-isopropylpropyl, 1,2-dimethylbutyl, n-heptyl, 2-heptyl, 1,4-dimethylpentyl, tert-heptyl, 2-methyl-1-isopropylpropyl, 1-ethyl-3-methylbutyl, n-octyl, tert-octyl, 2-ethylhexyl, 2-methylhexyl, 2-propylhexyl, n-nonyl, isononyl, n-decyl, isodecyl, n-undecyl, isoundecyl, n-dodecyl, isododecyl, n-tridecyl, isotridecyl, n-tetradecyl, isotetradecyl, n-pentadecyl, isopentadecyl, n-hexadecyl, isohexadecyl, n-heptadecyl, isoheptadecyl, n-octadecyl, isooctadecyl, n-nonadecyl, isononadecyl, n-icosyl, isoicosyl, cycloheptyl, cyclooctyl, and cyclododecyl. These hydrocarbon groups may partially be unsaturated.

From the viewpoint of ready availability and low elasticity of a cured product, the epoxy compound B as component (B) is preferably a cardanol-type epoxy compound. Cardanol is a phenolic lipid obtained by thermal decomposition of any of the naturally occurring anacardic acids. Specifically, cardanol has a chemical structure represented by general formula (3): 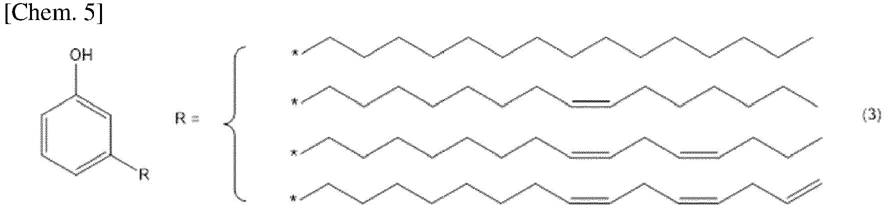 wherein R is one of the groups shown to the right of the opening brace; and * indicates the site bonded to the aromatic ring.

Usually, naturally derived cardanol is a mixture of the phenolic compounds represented by general formula (3), and the proportion of each compound in the mixture varies depending on natural products, purification conditions, and the like. For example, a mixture can contain about 5 mass% of a compound with C15 n-pentadecyl (saturated cardanol), about 35 mass% of a compound with (8Z)-8,11-pentadecenyl (mono-unsaturated cardanol), about 20 mass% of a compound with (8Z,11Z)-8,11-pentadienyl (di-unsaturated cardanol), and about 40 mass% of a compound with (8Z,11Z)-8,11,14-pentatrienyl (tri-unsaturated cardanol).

The cardanol-type epoxy compound, which is a preferred type of the epoxy compound B as component (B), is obtained by epoxidation of cardanol. Epoxidation of cardanol can be performed by any known processes, including the method described above for preparing the epoxy compound A as component (A). Specifically, epoxidation can be carried out by using 0.8 to 1.5 mol of a basic compound, e.g., sodium hydroxide and 2 to 20 mol of epichlorohydrin per mole of cardanol, and, if necessary, a phase transfer catalyst at 40° to 90°C under normal or reduced pressure. Excess epichlorohydrin is preferably removed by evaporation.

The epoxy compound B as obtained may be isolated and purified by one of or a combination of oil-water separation using water or organic solvents, filtration, concentration, distillation, extraction, crystallization, recrystallization, adsorption, column chromatography, and so on.

The epoxy compound B as component (B) may be a commercially available product, including NC 513, Ultra LITE 513, and LITE 513E, all from Cardolite Inc.

The mass ratio of components (A) to (B) in the epoxy resin composition of the invention preferably ranges from 90/10 to 10/90, more preferably from 80/20 to 20/80, even more preferably from 70/30 to 30/70, still more preferably 60/40 to 40/60, in terms of the balance between curing properties and the modulus of elasticity of cured products.

The epoxy resin composition of the invention may further contain a compound with an epoxy group (hereinafter referred to as the other epoxy compound(s)) other than components (A) and (B). Examples of useful other epoxy compounds include reactive diluents with one epoxy group, such as n-butyl glycidyl ether, C12-14 alkyl glycidyl ethers, allyl glycidyl ether, 2-ethylhexyl glycidyl ether, styrene oxide, phenyl glycidyl ether, cresyl glycidyl ether, p-sec-butylphenyl glycidyl ether, t-butylphenyl glycidyl ether, glycidyl methacrylate, and tertiary carboxylic acid glycidyl ester; polyglycidyl ethers of mononuclear polyhydric phenol compounds, such as hydroquinone, resorcin, pyrocatechol, and phloroglucinol; polyglycidyl ethers of polynuclear polyhydric phenol compounds, such as dihydroxynaphthalene, biphenol, methylene bisphenol (bisphenol F), methylene bis(ortho-cresol), ethylidene bisphenol, isopropylidene bisphenol (bisphenol A), isopropylidene bis(ortho-cresol), tetrabromobisphenol A, 1,3-bis(4-hydroxycumylbenzene), 1,4-bis(4-hydroxycumylbenzene), 1,1,3 -tris(4-hydroxyphenyl)butane, 1,1,2,2-tetra(4-hydroxyphenyl)ethane, thiobisphenol, sulfobisphenol, oxybisphenol, phenol novolac, o-cresol novolac, ethylphenol novolac, butylphenol novolac, octylphenol novolac, resorcin novolak, and terpene phenol; polyglycidyl ethers of polyhydric alcohols, such as ethylene glycol, propylene glycol, butylene glycol, hexanediol, polyglycol, thiodiglycol, dicyclopentadiene dimethanol, 2,2-bis(4-hydroxycyclohexylpropane) (hydrogenated bisphenol A), glycerol, trimethylolpropane, pentaerythritol, and sorbitol; homo- or co-polymers of glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endomethylene tetrahydrophthalic acid, and glycidyl methacrylate; glycidylamino-containing epoxy compounds, such as N,N-diglycidyl aniline, bis(4-(N-methyl-N-glycidylamino)phenyl)methane, diglycidyl o-toluidine, N,N-bis(2,3-epoxypropyl)-4-(2,3-epoxypropoxy)-2-methylaniline, N,N-bis(2,3-epoxypropyl)-4-(2,3-epoxypropoxy)aniline, and N,N,N',N'-tetra(2,3-epoxypropyl)-4,4'-diaminodiphenylmethane; epoxidized cyclic olefin compounds, such as vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, and bis(3,4-epoxy-6-methylcyclohexylmethyl) adipate; epoxidized conjugated diene polymers, such as epoxidized polybutadiene and epoxidized styrene-butadiene copolymers; and heterocyclic compounds, such as triglycidyl isocyanurate.

Urethane-modified epoxy resins obtained by adding a urethane structure to epoxy resins are also useful as other epoxy compounds. The urethane-modified epoxy resin has an epoxy group and a urethane bond in the molecule and can be prepared by, for example, allowing an epoxy compound having a hydroxy group in the molecule to react with a compound having an isocyanate group in accordance with the method described in JP 2016-210922A.

Rubber-modified epoxy resins obtained by the reaction between epoxy resins and CTBN and/or ATBN are also useful as other epoxy compounds.

In terms of the balance between workability of the resin composition and modulus of elasticity of cured products, preferred other epoxy compounds include the reactive diluents with one epoxy group and the polyglycidyl ethers of mononuclear polyhydric phenol compounds, with bisphenol A epoxy resins, bisphenol F epoxy resins, and t-butylphenyl glycidyl ether being more preferred.

From the viewpoint of the balance between curing properties and modulus of elasticity of cured products, the amount of the other epoxy compounds, if used, is preferably from 0 to 90 mass%, more preferably from 0 to 60 mass%, even more preferably from 0 to 30 mass%, relative to the total amount of compounds with epoxy groups.

The curing agent as component (C) includes amine curing agents, thiol curing agents, acid anhydrides, phenol resins, and cationic polymerization initiators. The mixture of components (A) and (B) and the other epoxy compound(s) optionally added exhibits superior curability in the presence of the curing agent to provide cured products with good flexibility.

Examples of the amine curing agents include aliphatic polyamines, such as ethylenediamine, diethylenetriamine, triethylenetetramine, tetraethylenepentamine, polyoxypropylenediamine, and polyoxypropylenetriamine; alicyclic polyamines, such as isophorone diamine, menthenediamine, bis(4-amino-3-methyldicyclohexyl)methane, diaminodicyclohexylmethane, bis(aminomethyl)cyclohexane, N-aminoethylpiperazine, and 3,9-bis(3-aminopropyl)-2,4,8,10-tetraoxaspiro(5.5)undecane; mononuclear polyamines, such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, and 3,5-diethyltolylene-2,6-diamine; and aromatic polyamines, such as biphenylenediamine, 4,4-diaminodiphenylmethane, 2,5-naphthylenediamine, and 2,6-naphthylenediamine. These amine curing agents may be used individually or in combination of two or more thereof.

The amine curing agent may be a modified amine obtained by the reaction between an amine compound and an epoxy compound and, if necessary, an isocyanate compound or urea.

Examples of the amine compound include alkylenediamines, such as ethylenediamine, 1,2-diaminopropane, 1,3-diaminopropane, 1,3-diaminobutane, 1,4-diaminobutane, and hexamethylenediamine; polyalkylpolyamines, such as diethylenetriamine, triethylenetriamine, and tetraethylenepentamine; alicyclic polyamines, such as 1,4-diaminocyclohexane, 1,3-diaminocyclohexane, 1,3-diaminomethylcyclohexane, 1,2-diaminocyclohexane, 1,4-diamino-3,6-diethylcyclohexane, 4,4' -diaminodicyclohexylmethane, 1,3-bis(aminomethyl)cyclohexane, 1,4-bis(aminomethyl)cyclohexane, 4,4' -diaminodicyclohexylpropane, bis(4-aminocyclohexyl)sulfone, 4,4' -diaminodicyclohexyl ether, 2,2' -dimethyl-4,4' -diaminodicyclohexylmethane, isophorone diamine, and norbornenediamine; aromatic polyamines, such as m-xylylenediamine, diaminodiphenylmethane, diaminodiphenylsulfone, diethyltoluenediamine, 1-methyl-3,5-diethyl-2,4-diaminobenzene, 1-methyl-3,5-diethyl-2,6-diaminobenzene, 1,3,5-triethyl-2,6-diaminobenzene, 3,3'-diethyl-4,4'-diaminodiphenylmethane, and 3,5,3',5'-tetramethyl-4,4'-diaminodiphenylmethane; guanamine compounds, such as benzoguanamine and acetoguanamine; imidazoles, such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, and 2-aminopropylimidazole; dihydrazides, such as oxalic dihydrazide, malonic dihydrazide, succinic dihydrazide, glutaric dihydrazide, adipic dihydrazide, suberic dihydrazide, azelaic dihydrazide, sebacic dihydrazide, and phthalic dihydrazide; N,N-dimethylaminoethylamine, N,N-diethylaminoethylamine, N,N-diisopropylaminoethylamine, N,N-diallylaminoethylamine, N,N-benzylmethylaminoethylamine, N,N-dibenzylaminoethylamine, N,N-cyclohexylmethylaminoethylamine, N,N-dicyclohexylaminoethylamine, N-(2-aminoethyl)pyrrolidine, N-(2-aminoethyl)piperidine, N-(2-aminoethyl)morpholine, N-(2-aminoethyl)piperazine, N-(2-aminoethyl)-N'-methylpiperazine, N,N-dimethylaminopropylamine, N,N-diethylaminopropylamine, N,N-diisopropylaminopropylamine, N,N-diallylaminopropylamine, N,N-benzylmethylaminopropylamine, N,N-dibenzylaminopropylamine, N,N-cyclohexylmethylaminopropylamine, N,N-dicyclohexylaminopropylamine, N-(3-aminopropyl)pyrrolidine, N-(3-aminopropyl)piperidine, N-(3-aminopropyl)morpholine, N-(3-aminopropyl)piperazine, N-(3-aminopropyl)-N'-methylpiperidine, 4-(N,N-dimethylamino)benzylamine, 4-(N,N-diethylamino)benzylamine, 4-(N,N-diisopropylamino)benzylamine, N,N-dimethylisophoronediamine, N,N-dimethylbisaminocyclohexane, N,N,N'-trimethylethylenediamine, N'-ethyl-N,N-dimethylethylenediamine, N,N,N'-trimethylethylenediamine, N' -ethyl-N,N-dimethylpropanediamine, N'-ethyl-N,N-dibenzylaminopropylamine; N,N-(bisaminopropyl)-N-methylamine, N,N-bisaminopropylethylamine, N,N-bisaminopropylpropylamine, N,N-bisaminopropylbutylamine, N,N-bisaminopropylpentylamine, N,N-bisaminopropylhexylamine, N,N-bisaminopropyl-2-ethylhexylamine, N,N-bisaminopropylcyclohexylamine, N,N-bisaminopropylbenzylamine, N,N-bisaminopropylallylamine, bis[3-(N,N-dimethylaminopropyl)]amine, bis[3-(N,N-diethylaminopropyl)]amine, bis[3-(N,N-diisopropylaminopropyl)]amine, and bis[3-(N,N-dibutylaminopropyl)]amine. These amine compounds may be used either individually or in combination of two or more thereof.

Examples of the epoxy compound that can be used to modify the amine compound include those recited above as the other epoxy compounds. The epoxy compounds recited as components (A) and (B) are also useful.

Examples of the isocyanate compound that can be used to modify the amines include aromatic diisocyanates, such as 2,4-tolylene diisocyanate, 2,6-tolylene diisocyanate, diphenylmethane 4,4'-diisocyanate, phenylene diisocyanate, xylylene diisocyanate, tetramethylxylylene diisocyanate, 1,5-naphthylene diisocyanate, 1,5-tetrahydronaphthalene diisocyanate, 3,3'-dimethyldiphenyl 4,4'-diisocyanate, dianisidine diisocyanate, and tetramethylxylylene diisocyanate; alicyclic diisocyanates, such as isophorone diisocyanate, dicyclohexylmethane 4,4'-diisocyanate, trans-1,4-cyclohexyl diisocyanate, and norbornene diisocyanate; aliphatic diisocyanates, such as tetramethylene diisocyanate, 1,6-hexamethylene diisocyanate, 2,2,4-trimethylhexamethylene diisocyanate, 2,4,4-trimethylhexamethylene diisocyanate, and lysine diisocyanate; isocyanurate trimers, biuret trimers, or trimethylolpropane adducts of the above recited diisocyanates; triphenylmethane triisocyanate, 1-methylbenzole-2,4,6-triisocyanate, and dimethyltriphenylmethane tetraisocyanate.

Methods for preparing the modified amines by the reaction between an amine compound, an epoxy compound, and urea include those described in JP 06-006620B and JP 3837134.

The amine curing agent may be an amine latent curing agent. The amine latent curing agent includes those having little effect on the viscosity and physical properties of epoxy resins when mixed therewith at room temperature, such as dicyandiamide, imidazole, or polyamine latent curing agents.

The dicyandiamide latent curing agent includes dicyandiamide either alone or combined with a curing accelerator (described later).

The imidazole latent curing agent is obtained by, for example, causing an epoxy compound to react with an active hydrogen-containing imidazole compound at 50° to 150°C for 1 to 20 hours with or without a solvent. After completion of the reaction, the solvent, if used, should be removed by 80° to 200°C under normal or reduced pressure.

Examples of the imidazole compound to be used in the preparation of the imidazole latent curing agent include 2-methylimidazole, 2-ethyl-4-methylimidazole, 2-undecylimidazole, 2-heptadecylimidazole, and 2-phenylimidazole.

Examples of the epoxy compound that can be used in the preparation of the imidazole latent curing agent include those recited above as the other epoxy compounds. Components (A) and (B) are also useful.

Examples of the solvent that can be used in the preparation of the imidazole latent curing agent include ketones, such as methyl ethyl ketone, methyl amyl ketone, diethyl ketone, acetone, methyl isopropyl ketone, propylene glycol monomethyl ether acetate, and cyclohexane; ethers, such as tetrahydrofuran, 1,2-dimethoxyethane, 1,2-diethoxyethane, and propylene glycol monomethyl ether; esters, such as ethyl acetate and n-butyl acetate; aromatic hydrocarbons, such as benzene, toluene, and xylene; halogenated aliphatic hydrocarbons, such as carbon tetrachloride, chloroform, trichloroethylene, and methylene chloride; and halogenated aromatic hydrocarbons, such as chlorobenzene.

The polyamine latent curing agent can be obtained by, for example, allowing a polyamine to react with an epoxy compound with or without a solvent at 50° to 150°C for 1 to 20 hours. After completion of the reaction, the solvent, if used, is removed at 80° to 200°C under normal or reduced pressure.

The polyamine that can be used in the preparation of the polyamine latent curing agent includes those having at least two amino groups of the amine compounds recited above for use in the preparation of the modified amines.

Examples of the epoxy compound and solvent that can be used in the preparation of the polyamine latent curing agent include those mentioned above for use in the preparation of the imidazole latent curing agent.

The amine latent curing agent may be used in combination with a phenol resin described below in order to improve the storage stability of the composition. The amount of the phenol resin to be combined is, for example, in the range of from 10 to 50 mass% based on the total mass of the amine latent curing agent.

Commercially available amine curing agents may be utilized, including ADEKA Hardener EH-3636AS and EH-4351S (dicyandiamide latent curing agents from Adeka Corp.); ADEKA Hardener EH-5011S and EH-5046S (imidazole latent curing agents from Adeka); ADEKA Hardener EH-4357S, EH-5057P, and EH-5057PK (polyamine latent curing agents from Adeka); Amicure PN-23 and PN-40 (amine adduct latent curing agents from Ajinomoto Finetechno Co., Ltd.); Amicure VDH (hydrazide latent curing agent from Ajinomoto Finetechno); and Fujicure FXR-1020 (urea latent curing agent from T&K TOKA Co., Ltd.).

The amine curing agent as component (C) is preferably used in an amount of 1 to 100 parts by mass, more preferably 5 to 60 parts by mass, per 100 parts by mass of the sum of components (A) and (B), and other epoxy compounds in terms of the balance between curing properties and modulus of elasticity of cured products.

Examples of the thiol curing agent include pentaerythritol tetrakis(3-mercaptopropionate), pentaerythritol tetrakis (thioglycolate), dipentaerythritol hexakis(3-mercaptopropionate), dipentaerythritol hexakis(3-mercaptobutyrate), 1,3,4,6-tetrakis(2-mercaptoethyl)-1,3,4,6-tetraazaoctahydropentalene-2 ,5-dione, 1,3,5-tris(3-mercaptopropyl)-1,3,5-triazine-2,4,6(1H,3H,SH)-trione, 4-mercaptomethyl-1,8-dimercapto-3,6-dithiaoctane, 4,8-, 4,7- or 5,7-dimercaptomethyl-1,11-dimercapto-3,6,9-trithiaundecane, 1,3,4,6-tetrakis(2-mercaptoethyl)glycoluril, 1,2,3-tris(mercaptomethylthio)propane, 1,2,3-tris (2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 4,6-bis(mercaptomethylthio)-1,3-dithiane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 3-mercaptomethylthio-1,7-dimercapto-2, 6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-[3,3-bis(mercaptomethylthio)-1-thiapropyl]-3,7-di thianonane, tris(2,2-bis (mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6, 8,12,14,18-hexathianon adecane, 9-(2,2-bis(mercaptomethylthio)ethyl)-3,5,13,15-tetrakis(mercaptomethylthio)-1,17-dimer capto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexa decane, 8-[bis(mercaptomethylthio)methyl]-3,4,12,13-tetrakis(mercaptomethylthio)-1,15-dimerca pto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3- dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 1,5-bis[4-(6-mercaptomethylthio)-1,3-dithianylthio]-3-[2-(1,3-dithiethanyl)]methyl-2,4-di thiapentane, 3-[2-(1,3-dithietanyl)]methyl-7,9-bis(mercaptomethylthio)-1,11-dimercapto-2,4,6,10-tetra thiaundecane, 9-[2-(1,3-dithietanyl)]methyl-3,5,13,15-tetrakis(mercaptomethylthio)-1,17-dimercapto-2, 6,8,10,12,16-hexathiaheptadecane, 3-[2-(1,3-dithietanyl)]methyl-7,9,13,15-tetrakis(mercaptomethylthio)-1,17-dimercapto-2, 4,6,10,12,16-hexathiaheptadecane, 3,7-bis[2-(1,3)-dithietanyl)]methyl-1,9-dimercapto-2,4,6,8-tetrathianonane, 4,6-bis{3-[2-(1,3-dithietanyl)]methyl-5-mercapto-2,4-dithiapentylthio}-1,3-dithiane, 4,6-bis[4-(6-mercaptomethylthio)-1,3-dithianylthio]-6-[4-(6-mercaptomethylthio)-1,3-dit hianylthio]-1,3-dithiane, 4-[3,4,8,9-tetrakis(mercaptomethylthio)-11-mercapto-2,5,7,10-tetrathiaundecyl]-5-mercap tomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1, 3-dithiolane, 4-[3-bis(mercaptomethylthio)methyl-5,6-bis(mercaptomethylthio)-8-mercapto-2,4,7-trithi aoctyl]-5-mercaptomethylthio-1,3-dithiolane, 2-{bis [3,4-bis(mercaptomethylthio)-6-mercapto-2,5-dithia hexylthio]methyl}-1,3-dithietane, 2-[3,4-bis(mercaptomethylthio)-6-mercapto-2,5-dithiahexylthio]mercaptomethylthiometh yl-1,3-dithietane, 2-[3,4,8,9-tetrakis(mercaptomethylthio)-11-mercapto-2,5,7,10-tetrathiaundecylthio]merca ptomethylthiomethyl- 1,3-dithietane, 2-[3-bis(mercaptomethylthio)methyl-5,6-bis(mercaptomethylthio)-8-mercapto-2,4,7-trithi aoctyl]mercaptomethylthiomethyl-1,3-dithietane, 4,5-bis t 1- [2-(1,3-dithietanyl)] -3-mercapto-2-thiapropylthio 1,3-dithiolane, 4-{1-[2-(1,3-dithietanyl)]-3-mercapto-2-thiapropylthio}-5-[1,2-bis(mercaptomethylthio)-4-mercapto-3-thiabutylthio]-1,3-dithiolane, 2-{bis[4-(5-mercaptomethylthio-1,3-dithiolanyl)thio]methyl}-1,3-dithietane, and 4-[4-(5-mercaptomethylthio-1,3-dithiolanyl)thio]-5- { 1-[2-(1,3-dithietanyl)]-3-mercapto-2 -thiapropylthio}-1,3-dithiolane. These thiol compounds may be used individually or in combination of two or more thereof.

The thiol curing agent as component (C) is preferably used in an amount of 1 to 100 parts by mass, more preferably 40 to 80 parts by mass, per 100 parts by mass of the sum of components (A) and (B) and other epoxy compounds in terms of the balance between curing properties and modulus of elasticity of cured products.

Examples of the acid anhydride include himic anhydride, phthalic anhydride, maleic anhydride, methylhimic anhydride, succinic anhydride, tetrahydrophthalic anhydride, hexahydrophthalic anhydride, methyltetrahydrophthalic anhydride, methylhexahydrophthalic anhydride, trialkyltetrahydrophthalic anhydride-maleic anhydride adducts, methylhexahydrophthalic anhydride, trialkyltetrahydrophthalic anhydride maleic anhydride adducts, benzophenonetetracarboxylic anhydride, trimellitic anhydride, pyromellitic anhydride, and hydrogenated methylnadic anhydride.

The acid anhydride as component (C) is preferably used in an amount of 30 to 300 parts, more preferably 50 to 100 parts, by mass per 100 parts by mass of the sum of components (A) and (B), and other epoxy compounds in terms of the balance between curing properties and modulus of elasticity of cured products.

Examples of the phenol resin as component (C) include polyhydric phenol compounds, such as phenol novolak resins, aromatic hydrocarbon formaldehyde resin-modified phenol resins, dicyclopentadiene phenol adduct resins, phenol aralkyl resins (Xyloc resins), naphthol aralkyl resins, trisphenylolmethane resins, tetraphenylolethane resins, naphthol novolak resins, naphthol-phenol cocondensate novolak resins, naphthol-cresol cocondensate novolak resins, biphenyl-modified phenol resins (polyhydric phenol compounds having phenol nuclei linked by bismethylene), biphenyl-modified naphthol resins (polyhydric naphthol compounds having phenol nuclei linked by bismethylene), aminotriazine-modified phenol resins (compounds having a phenol structure, a triazine ring, and a primary amino group in the molecule), and alkoxy-containing aromatic ring-modified novolak resins (polyhydric phenol compounds having a phenol nucleus and an alkoxy-containing aromatic ring linked by formaldehyde).

The phenol resin as component (C) is preferably used in an amount of 10 to 200 parts, more preferably 50 to 100 parts, by mass per 100 parts by mass of the sum of components (A) and (B), and other epoxy compounds in terms of the balance between curing properties and modulus of elasticity of cured products.

The cationic polymerization initiator is a compound capable of releasing a substance inducing cationic polymerization when exposed to heat or energy rays. Preferred cationic initiators are double salts which are onium salts capable of releasing a Lewis acid upon exposure to heat or light and their derivatives. Such compounds are typified by salts between a cation and an anion represented by general formula: [A]^{m+}[B]^{m-}.

The cation [A]^{m+} is preferably an onium ion, which is represented by, for example, general formula [(R⁵)ₚQ]^{m+}, wherein R⁵ is an organic group containing 1 to 60 carbon atoms and optionally any number of atoms other than carbon; p is an integer of 1 to 5; the plurality of R⁵'s are independent of each other and may be the same or different, and at least one of them is preferably the organic group which has an aromatic ring; Q is an atom or an atomic group selected from the group consisting of S, N, Se, Te, P, As, Sb, Bi, O, I, Br, Cl, F, and N=N; and m is a number satisfying relationship: m = p - q, wherein q is the valence of Q in the cation [A]^{m+}, provided that the valence of N=N is taken as 0.

The anion [B]^{m-} is preferably a halide complex ion, which is represented by, for example, general formula [LXᵣ]^{m-}, wherein L is a metal or metalloid, a center atom of the halide complex, e.g., B, P, As, Sb, Fe, Sn, Bi, Al, Ca, In, Ti, Zn, Sc, V, Cr, Mn, or Co; X is a halogen atom; r is an integer of 3 to 7; and m is a number satisfying relationship: m = r - s, wherein s is the valence of L in the anion [B]^{m-}.

Examples of the anion [LXᵣ ]^{m-} include tetrafluoroborate ion (BF₄)⁻, hexafluorophosphate ion (PF₆)⁻, hexafluoroantimonate ion (SbF₆)⁻, hexafluoroarsenate ion (AsF₆)⁻, and hexachloroantimonate ion (SbCl₆)⁻.

Anions represented by [LXᵣ₋₁(OH)]^{m-} are also preferred as an anion [B]^{m-}, wherein L, X, and r are as defined above. Other useful anions are perchlorate ion (ClO₄)⁻, trifluoromethylsulfite ion (CF₃SO₃)⁻, fluorosulfonate ion (FSO₃)⁻, toluenesulfonate anion, and trinitrobenzenesulfonate ion.

The above-described onium salts specifically include aromatic onium salts (a) to (c) below, which may be used individually or as a mixture of two or more thereof.
(a) Aryldiazonium salts including phenyldiazonium hexafluorophosphate, 4-methoxyphenyldiazonium hexafluoroantimonate, and 4-methylphenyldiazonium hexafluorophosphate.
(b) Diaryliodonium salts including diphenyliodonium hexafluoroantimonate, di(4-methylphenyl)iodonium hexafluorophosphate, and di(4-tert-butylphenyl)iodonium hexafluorophosphate.
(c) Triarylsulfonium salts including triphenylsulfonium hexafluoroantimonate, tris(4-methoxyphenyl)sulfonium hexafluorophosphate, diphenyl-(4-thiophenoxyphenyl)sulfonium hexafluoroantimonate, diphenyl-(4-thiophenoxyphenyl)sulfonium hexafluorophosphate, 4,4'-[bis(diphenylsulfonio)phenyl]sulfide-bis-(hexafluoroantimonate), 4,4'-[bis(diphenylsulfonio)phenyl]sulfide-bis(hexafluorophosphate), 4,4'-bis[di(β-hydroxyethoxy)phenylsulfonio]phenyl sulfide-bis-(hexafluoroantimonate), 4,4'-bis[di(P-hydroxyethoxy)phenylsulfonio]phenyl sulfide-bis-(hexafluorophosphate), 4-[4'-(benzoyl)phenylthio]phenyl -di-(4-fluorophenyl)sulfonium hexafluoroantimonate, and 4-(4' -benzoylphenylthio)phenyl-di-(4-fluorophenyl)sulfonium hexafluorophosphate.

In addition to the above cationic polymerization initiators, also useful are iron arene complexes, such as(η⁵-2,4-cyclopentadien-1-yl)[(1,2,3,4,5,6-η)-(1-methylethyl)benzene]iron hexafluorophosphate, and mixtures of an aluminum complex, such as tris(acetylacetonato)aluminum, tris(ethylacetonatoacetato)aluminum or tris(salicylaldehydato)aluminum, and a silanol, such as triphenylsilanol.

Furthermore, cationic polymerization initiators described in the following patent literatures are also useful: JP 6-41215A, JP 6-65310A, JP 6-206862A, JP 6-247925A, JP 2699188, JP 2706833, JP 2709625, JP 2782093, JP 2782104, JP 2782106, JP 2006-282633A, and JP 2007-91702A.

Commercially available cationic polymerization initiators include Kayarad PCI-220 and Kayarad PCI-620 (both available from Nippon Kayaku Co., Ltd.); UVI-6990 (from Union Carbide Corp.); Adekaoptomer SP-150 and Adekaopotomer SP-170 (both from ADEKA Corp.); CI-5102, CIT-1370, CIT-1682, CIP-1866S, CIP-2048S, CIP-2064S (all from Nippon Soda Co., Ltd.); DPI-101, DPI-102, DPI-103, DPI-105, MPI-103, MPI-105, BBI-101, BBI-102, BBI-103, BBI-105, TPS-101, TPS-102, TPS-103, TPS-105, MDS-103, MDS-105, DTS-102, DTS-103 (all from Midori Kagaku Co., Ltd.); PI-2074 (from Rhodia Ltd.); and SI-60L, SI-80L, and SI-100L (all from Sanshin Chemical Industry Co., Ltd.).

The photopolymerization initiator as component (C) is preferably used in an amount of 0.1 to 20 parts, more preferably 1 to 7 parts, by mass per 100 parts by mass of the sum of components (A) and (B), and other epoxy compounds in terms of the balance between curing properties and modulus of elasticity of cured products.

Among the above-recited curing agents, the amine and the thiol curing agents are preferred from the viewpoint of enabling low temperature curing.

The epoxy resin composition of the invention may contain a curing accelerator. The combined use of a curing accelerator increases the curing rate. Examples of useful curing accelerators include phosphines, such as triphenylphosphine; phosphonium salts, such as tetraphenylphosphonium bromide; imidazoles, such as 2-methylimidazole, 2-phenylimidazole, 2-ethyl-4-methylimidazole, 2-undecylimidazole, and 1-cyanoethyl-2-methylimidazole; imidazole salts between the imidazole compound recited above and trimellitic acid, isocyanuric acid, boron, and so on; amines, such as benzyldimethylamine and 2,4,6-tris(dimethylaminomethyl)phenol; quaternary ammonium salts, such as trimethylammonium chloride; ureas, such as 3-(p-chlorophenyl)-1,1-dimethylurea, 3-(3,4-dichlorophenyl)-1,1-dimethylurea, 3-phenyl-1,1-dimethylurea, isophorone diisocyanate-dimethylurea, and tolylene diisocyanate-dimethylurea; and complex compounds between boron trifluoride and amines, and between boron trifluoride and ether compounds. The curing accelerators may be used either individually or in combination thereof. The curing accelerator content is not particularly limited and is decided as appropriate to the intended use of the epoxy resin composition.

The above-described curing accelerators may be of core/shell type, specifically masterbatch type curing accelerators in which a curing agent is dispersed in an epoxy resin, the agent being composed of a solid tertiary amine compound as a core and a reaction product between the amine compound and the epoxy resin as a shell, as disclosed in JP 07-005708B, JP 4405741, etc. These curing accelerators are preferably used in combination with the thiol curing agent or the acid anhydride from the viewpoint of storage stability of the epoxy resin composition.

Commercially available masterbatch type curing accelerators may be utilized, including Novacure series HX-3742, HX-3721, HXA9322HP, HXA3922HP, HXA3932HP, HXA5945HP, and HXA9382HP available from Asahi Kasei Corp.

The epoxy resin composition of the invention may optionally contain a silane coupling agent. Examples of useful silane coupling agents include y-aminopropyltriethoxysilane, N-β-(aminoethyl)-γ-aminopropyltriethoxysilane, N-β-(aminoethyl)-N'-β-(aminoethyl)-γ-aminopropyltriethoxysilane, γ-anilinopropyltriethoxysilane, γ-glycidoxypropyltriethoxysilane, β-(3,4-epoxycyclohexyl)ethyltriethoxysilane, vinyltriethoxysilane, N-β-(N-vinylbenzylaminoethyl)-γ-aminopropyltriethoxysilane, γ-methacryloxypropyltrimethoxysilane, γ-chloropropyltrimethoxysilane, γ-mercaptopropyltrimethoxysilane, and γ-isocyanatopropyltriethoxysilane.

Among the above silane coupling agents, those having an epoxy group are preferred from the viewpoint of improving the adhesion of the epoxy resin composition when used as an adhesive.

Commercially available silane coupling agents can be utilized, including KBM-403, KBE-403, and KBM-402 available from Shin-Etsu Chemical Co., Ltd.

From the viewpoint of the balance between curing properties and modulus of elasticity of cured products, the amount of the silane coupling agent, if used, is preferably 0.1 to 20 parts, more preferably 0.2 to 5 parts, by mass per 100 parts by mass of the total amount of components (A) and (B), and the other epoxy compounds.

The epoxy resin composition of the invention may optionally contain an inorganic filler. Examples of useful inorganic fillers include silica, such as fused silica, crystalline silica, or fumed silica; powders and spherized beads of magnesium hydroxide, aluminum hydroxide, zinc borate, zinc molybdate, calcium carbonate, silicon nitride, silicon carbide, boron nitride, calcium silicate, potassium titanate, aluminum nitride, beryllia, zirconia, zircon, forsterite, steatite, spinel, mullite, titania, and so forth; and glass fiber.

The epoxy resin composition of the invention may further contain other various additives according to necessity. Useful additives include nonreactive diluents (plasticizers), such as dioctyl phthalate, dibutyl phthalate, benzyl alcohol, and coal tar; fibrous fillers, such as glass fiber, pulp fiber, synthetic fiber, and ceramic fiber; reinforcing materials, such as glass cloth, aramid cloth, and carbon fiber; pigments; lubricants, such as candelilla wax, carnauba wax, Japan tallow, Chinese insect wax, bees wax, lanolin, spermaceti, montan wax, petroleum wax, aliphatic waxes, aliphatic esters, aliphatic ethers, aromatic esters, and aromatic ethers; thickeners; thixotropic agents; antioxidants; light stabilizers; ultraviolet absorbers; flame retardants; anti-foaming agents; rust inhibitors; colloidal silica, colloidal alumina; and other commonly used additives. Tacky resins, such as xylene resins and petroleum resins, may be used in combination.

The epoxy resin composition of the invention preferably has a low total chlorine content in terms of reliability under high temperature and high humidity conditions. The total chlorine content of the epoxy resin composition is preferably 2000 ppm or lower, more preferably 1000 ppm or lower. The lower the total chlorine content, the more desirable, so the ideal value for total chlorine content is 0 ppm. The total chlorine content can be determined by combustion-amperometric titration.

The epoxy resin composition of the invention preferably has a viscosity of 20 to 600 mPa·s, more preferably 50 to 400 mPa·s, in terms of workability. The viscosity can be measured using a cone and plate viscometer (E type viscometer).

The epoxy resin composition of the invention can be produced by stirring, melting, mixing, and dispersing components (A) to (C) and other optional components, if necessary with heating. The apparatus for carrying out the stirring, melting, mixing, and dispersing is not particularly limited and includes automated mortars equipped with a stirrer and a heater, three-roller mills, ball mills, planetary mixers, bead mills, and planetary stirrers. The apparatuses recited above may be used in appropriate combination.

The epoxy resin composition of the invention is useful in a wide variety of applications, including coatings for concrete, cement, mortar, various metals, leather, glass, rubber, plastics, wood, cloth, and paper; resin materials for electronic circuit boards, such as printed wiring laminates, interlayer insulating materials for buildup circuit boards, adhesive film for buildup boards, die attaching agents, flip-chip underfills, glob-top materials, liquid sealants for TCPs, conductive adhesives, liquid crystal sealants, coverlays for flexible circuit boards, and resist inks; semiconductor sealants; optical materials, such as optical waveguides and optical films; resin casting materials; various photosemiconductor devices, such as LEDs, photo transistors, photo diodes, photo couplers, CCDs, EPROMs, and photo sensors; and fiber-reinforced resin molded products, such as CFRPs.

The epoxy resin composition of the invention provides cured products that are reliable due to a low modulus of elasticity as well as having adhesive properties characteristic of epoxy resins. Therefore, it is applicable to resin materials for electronic circuit boards, semiconductor sealants, and adhesives for electronic components, and is especially suitable as adhesives and sealants for camera module components.

### Examples

The invention will now be illustrated in greater detail with reference to Examples. Unless otherwise noted, all the percentages are given by mass.

### Preparation Example 1

In a 20 L SUS-made reaction vessel were put 3.4 kg (molar quantity of hydroxy groups: 18.9 mol) of bisphenol A propylene oxide adduct (Adeka Polyether BPX-11 from ADEKA Corp.), 8.8 kg (95.1 mol) of epichlorohydrin, and 22.0 g (0.096 mol) of a 50% aqueous tetramethylammonium chloride solution. The mixture was heated to 55° to 60°C, and then decompression was started. The degree of decompression was adjusted to confirm that the epichlorohydrin had refluxed at 55° to 60°C. After the confirmation, 1.9 kg (22.6 mol) of a 48% aqueous sodium hydroxide solution was added thereto dropwise in such a manner as to maintain the reaction temperature at 55° to 60°C. After completion of the dropwise addition, the reaction mixture was stirred at 55° to 60°C until the recovered water amounted to at least 1.2 kg. The reaction solution was cooled to room temperature or lower, followed by filtration to remove unnecessary solid, followed by removal of epichlorohydrin under reduced pressure, to give 4.4 kg of epoxy compound A-1 (yield: 90%; epoxy equivalent: 257 g/eq.; viscosity (25°C): 2100 mPa·s; total chlorine content: 2300 ppm; saponifiable chlorine content: 40 ppm).

### Preparation Example 2

Epoxy compound A-1 obtained in Preparation Example 1 weighing 4.0 kg was purified by evaporation using a wiper thin film evaporator under conditions: temperature of evaporation line, 180°C; degree of vacuum, 15 Pa or less; and feed rate of epoxy compound A-1, 0.55 kg/h, to give epoxy compound A-2 (yield: 87.4%; epoxy equivalent: 273 g/eq.; viscosity (25°C): 2540 mPa·s; total chlorine content: 500 ppm).

Materials used in Examples are:
- A-2: Epoxy compound prepared in Preparation Example 2, containing as a main component a mixture of compounds of general formula (1) wherein R¹ and R² are each isopropylene; R³ is -C(CH₃)₂-; and a and b are each a number with an average value of 1
- D-1: Adeka Resin EP-4100E, a bisphenol epoxy resin available from Adeka Corp.
- D-2: Adeka Glycirol ED-509S, t-butylphenyl glycidyl ether from Adeka Corp.
- B-1: LITE 513E, a cardanol-type epoxy compound from Cardolite Inc.
- C-1: Adeka Hardener EH-5011S, an imidazole latent curing agent from Adeka Corp.
- E-1: RY-200S, hydrophobic fumed silica from Nippon Aerosil Co., Ltd.

### Examples 1 to 5 and Comparative Examples 1 to 4

Materials of Table 1 were put in a 500 mL disposable cup in the ratio shown and stirred with a spatula for 10 minutes and then on a planetary stirrer to prepare an epoxy resin composition. The epoxy resin composition was evaluated for curing properties, flexibility, workability, total chlorine content, and viscosity according to the methods below. The results of evaluation are shown in Table 1.

### 1. Curing properties (curability)

Two grams of the epoxy resin composition was placed in a thermostat at 120°C and left to stand for 2 hours. When the resin composition after the heating was touched with a spatula, it passed the curability test if it did not show fluidity, and failed if it did.

### 2. Flexibility

The procedure of JIS K5600-5-1 was followed. The epoxy resin composition was applied to a tinned steel strip to a thickness of 1 mm and cured at 120°C over a period of 2 hours. The test strip was bent 180 degrees over a 2 mm diameter mandrel and passed the flexibility test if it did not break or crack, and failed if it did break or crack.

### 3. Workability

The epoxy resin composition with a viscosity of less than 600 mPa passed, those with a viscosity of 600 mPa or higher failed.

### 4. Total chlorine content

The total chlorine content was measured using a total organic halogen analyzer TOX-2100 from Nittoseiko Analytech.

### 5. Viscosity

The viscosity was measured with an E type viscometer at 25°C.

**Table 1**

| | Example | | | | | Comparative Example | | | |
|---|---|---|---|---|---|---|---|---|---|
| | 1 | 2 | 3 | 4 | 5 | 1 | 2 | 3 | 4 |
| A-2 | 50 | 20 | 40 | 60 | 80 | - | 50 | - | 100 |
| D-1 | - | - | - | - | - | 50 | - | - | - |
| D-2 | - | - | - | - | - | - | 50 | - | - |
| B-1 | 50 | 80 | 60 | 40 | 20 | 50 | - | 100 | - |
| C-1 | 20 | 20 | 20 | 20 | 20 | 20 | 20 | 20 | 20 |
| E-1 | 4 | 4 | 4 | 4 | 4 | 4 | 4 | 4 | 4 |
| Curability | pass | pass | pass | pass | pass | pass | pass | fail | pass |
| Flexibility | pass | pass | pass | pass | pass | fail | fail | - | fail |
| Workability | Pass | pass | pass | pass | pass | pass | pass | pass | fail |
| Total Chlorine Content (ppm) | 810 | 883 | 835 | 786 | 738 | 1093 | 609 | 931 | 689 |
| Viscosity (mPa·s) | 120 | 51 | 86 | 186 | 496 | 169 | 126 | 29 | 2000 |

As demonstrated in Table 1, the epoxy resin composition of the invention proved superior in balance between curing properties and flexibility. In Comparative Examples 1 to 4 where the epoxy resin composition of the invention was not used, satisfactory results were not obtained in one or both of curing properties and flexibility. In Comparative Example 3, the evaluation for flexibility was not conducted because the resin composition did not cure under the conditions of 120°C and 2 hours.

## Claims

1. An epoxy resin composition comprising
(A) an epoxy compound A represented by general formula (1) described below:
(B) an epoxy compound B represented by general formula (2) described below: and
(C) a curing agent; 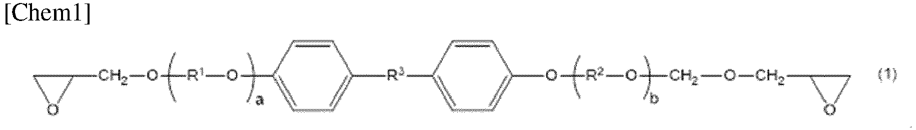
wherein R¹ and R² each independently represent an alkylene group having 2 to 4 carbon atoms; R³ represents a methylene group or -C(CH₃)₂-; and a and b each independently represent a number of 1 to 10, 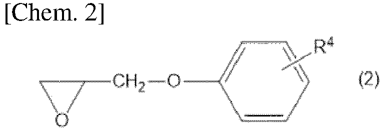
wherein R⁴ represents a hydrocarbon group having 6 to 20 carbon atoms.

2. The epoxy resin composition according to claim 1, wherein component (B) is a cardanol-type epoxy compound.

3. The epoxy resin composition according to claim 1, wherein a mass ratio of components (A) to (B) is from 90/10 to 10/90.

4. The epoxy resin composition according to claim 1, wherein component (C) comprises at least one of amine curing agents and thiol curing agents.

5. The epoxy resin composition according to claim 1, having a total chlorine content of 2000 ppm or lower.

6. A cured product obtained by curing the epoxy resin composition according to any one of claims 1 to 5.
